Europäisches Patentamt

(19) European Patent Office    (11) Numéro de publication: **0 104 100**

Office européen des brevets    **B1**

(12)    **FASCICULE DE BREVET EUROPEEN**

(45) Date de publication du fascicule du brevet: **06.04.88**    (51) Int. Cl.⁴: $B\ 03\ D\ 1/02$, $B\ 28\ C\ 1/08$

(21) Numéro de dépôt: **83401620.6**

(22) Date de dépôt: **05.08.83**

---

(54) **Procédé de traitement de l'argile pour en éliminer les impuretés minérales à base de titane.**

---

(30) Priorité: **25.08.82 US 411588**

(43) Date de publication de la demande:
**28.03.84 Bulletin 84/13**

(45) Mention de la délivrance du brevet:
**06.04.88 Bulletin 88/14**

(84) Etats contractants désignés:
**DE FR GB**

(56) Documents cités:
**FR-A-2 222 141**
**US-A-2 569 680**
**US-A-3 353 668**
**US-A-3 450 257**
**US-A-3 599 879**
**US-A-3 974 067**
**US-A-4 186 027**

(73) Titulaire: **ENGELHARD CORPORATION**
**70 Wood Avenue South CN 770**
**Iselin New Jersey 08830 (US)**

(72) Inventeur: **Young, Raymond H.**
**1866 Wood Valley Road**
**Macon Georgia 31211 (US)**
Inventeur: **Morris, Horton H.**
**1715 Waverland Drive**
**Macon Georgia 31211 (US)**
Inventeur: **Brooks, Robert L.**
**509 Milledgeville Road**
**Gordon Georgia 31031 (US)**

(74) Mandataire: **Bonnetat, Christian et al**
**Cabinet PROPI Conseils 23 rue de Léningrad**
**F-75008 Paris (FR)**

---

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# 0 104 100

**Description**

La présente invention se rapporte à un procédé de traitement de l'argile pour la blanchir par l'élimination des impuretés colorantes, en particulier des impuretés minérales à base de titane, par exemple des impuretés à base de $TiO_2$, et elle concerne plus particulièrement un procédé très efficace comportant l'utilisation de procédures de flottation par moussage et de blanchiments oxydant et réducteur ainsi que d'un sel polyacrylate défloculant utilisé au point le plus efficace du procédé.

Le kaolin brut d'extraction est impur, en ce sens qu'il est associé mécaniquement à une diversité d'autres minéraux. La kaolinite pure est un minéral constitué par un aluminosilicate contenant des hydroxyles et elle est composée des éléments hydrogène, oxygène, aluminium et silicium. Dans le kaolin, on trouve en supplément de ces éléments, d'autres éléments, dont le carbone, le magnésium, le calcium, le sodium, le potassium, le fer et le titane ne sont que quelques-uns des quelques deux douzaines d'éléments qui peuvent être détectés par analyse chimique. Si la kaolinite pure est incolore, les colorations observées dans le kaolin doivent être attribuées aux éléments constituant des impuretés et que l'on trouve dans l'argile sous une forme minérale ou organique. Ces impuretés colorantes très finement divisées sont très préjudiciables à la valeur et à l'utilité de l'argile dans de nombreuses applications telles que la fabrication du papier de haute qualité, dans lesquelles on exige un pigment qui possède une brillance et une blancheur élevées. Le dioxyde de titane impur ($TiO_2$) est reconnu comme une impureté colorante extrêmement importante présente dans le kaolin. Le fer s'incorpore probablement dans le réseau cristallin des formes anatase et rutile du dioxyde de titane pour donner naissance à un pigment très coloré. Il suffit de 1% ou mins de fer dans l'anatase ou le rutile pour rendre ce composé fortement coloré. Dans le présent mémoire, l'expression "dioxyde de titane" désigne la forme impure de l'anatase et du rutile.

Les procédés utilisés pour séparer et concentrer les minerais et minéraux en leurs composants comprennent deux principes généraux: l'attaque chimique directe de l'un ou de plusieurs des composants des minéraux et des processus chimiques qui assurent la séparation sélective d'un ou plusieurs des composants des minéraux et minerais. Dans le cas du kaolin, l'attaque chimique directe ne s'est pas révélée entièrement efficace ni économiquement réalisable. Les traitements de blanchiment classiques utilisant des conditions faiblement acides et fortement réductrices limitent le gain de brillance qui peut être obtenu avec le kaolin puisque la teneur en $TiO_2$ reste pratiquement inchangée.

On connaît dans la technique divers procédés de séparation et de concentration physiques des minéraux et minérais, y compris les traitements de flottation par moussage. Une condition préalable commune à tous ces procédés consiste en ce que la matière de la charge doit être fragmentée ou broyée à un degré de finesse tel que les liaisons mécaniques entre les divers composants minéraux aient été éliminées. La séparation des composants des minéraux et minerais peut alors s'effectuer en préparant une boue ou suspension de l'argile dans l'eau à l'aide d'agents dispersants. La technique antérieure appliquée dans les traitements de flottation par moussage demande un ajustement du pH de la suspension sur une valeur, soit acide, soit alcaline, l'addition d'un collecteur, le conditionnement de la suspension pendant un certain temps, pour dissiper de l'énergie dans l'argile, l'addition d'agents moussants à la suspension conditionnée, la dilution de cette suspension à une faible proportion de solides, l'accroissement du pH au-dessus de 8 et l'introduction d'air à travers la suspension. Une variante de l'opération classique de flottation par moussage est appelée dans la technique "ultraflottation" et consiste à ajouter un minéral véhicule finement divisé tel que la calcite à une charge de flottation d'argile et à soumettre ensuite le mélange à la flottation par moussage.

Les traitements de flottation classiques présentent certains inconvénients inhérents parmi lesquels on peut citer:

(1) La suspension de charge dispersée est le mieux traitée à une teneur en solides relativement basse de 20% en poids, ou même de 10% en poids ou moins; ceci conduit donc à un grand volume de suspension traitée par tonne d'argile sèche. Par exemple, en portant les solides de la suspension de 10% à 30%, on obtient une diminution de 74,1% de la quantité d'eau qu'il est nécessaire d'éliminer pour produire une tonne d'argile. En conséquence, des niveaux élevés de solides dans la suspension se traduisent par de plus faibles coûts d'élimination de l'eau.

(2) Le produit mousse initiale contient environ 50% du minéral de la charge, ainsi que des impuretés, ce qui exige un retraitement pour obtenir des rendements raisonnables de produits—quatre étages de flottation sont fréquemment nécessaires.

(3) Il est d'importance critique d'éliminer toutes traces du minéral véhicule éventuellement utilisé du minéral amélioré puisque la présence du minéral véhicule serait préjudiciable dans le produit final.

Dans certains cas de la technique antérieure, dans lesquels la flottation par moussage était utilisée en tant que partie des procédés de traitement de l'argile pour en éliminer les impuretés colorantes telles que les impuretés minérales à base de titane, l'argile résultante ne possédait pas encore une brillance suffisante. Dans d'autres cas, on devait adopter des techniques de purification additionnelles telles que les techniques d'ultraflottation utilisant des particules minérales fines (brevet U.S. 3 337 048) ou la séparation magnétique (brevet U.S. 3 974 067) pour obtenir une brillance adéquate dans l'argile traitée. Ces techniques de traitements additionnels introduisaient de nouveaux frais et une nouvelle consommation d'énergie. Par exemple, dans l'ultraflottation, on encourt des frais en ajoutant les particules minérales finement divisées mais en encourt également des frais en éliminant les particules après la flottation par

2

# 0 104 100

moussage. L'addition et l'élimination des particules finement divisées se traduit également par une plus grande consommation d'énergie. Le brevet U.S. 3 974 067 montre que l'addition d'un sel hydrosoluble de l'acide polyacrylique avant ou pendant le conditionnement mais non pas après le conditionnement et avant la flottation donne une argile traitée qui exige l'application de nouvelles techniques de purification, de la nature de la séparation magnétique, pour donner une argile traitée qui possède une brillance suffisante.

Le brevet U.S. 2 569 680 décrit un procédé de flottation destiné à blanchir l'argile qui consiste à traiter la barbotine d'argile à l'aide de cendres sodiques et de silicate de sodium et à rendre le mélange résultant légèrement acide à l'aide de HCl. Les cendres sodiques sont utilisés comme agent défloculant et le silicate de sodium est principalement ajouté comme déprimant, bien qu'il soit indiqué qu'il favorise également la défloculation de l'argile. On conditionne le mélange et on ajoute de l'acide oléique en tant que collecteur, ainsi qu'un agent de flottation comprenant une émulsion d'un acide gras et d'une amine d'acide gras. On ajoute l'acide oléique et on soumet la barbotine à la flottation, dans laquelle on ajoute comme agent moussant un mélange d'alcool amylique. Toutefois, ce brevet ne décrit ni ne suggère l'utilisation d'un sel polyacrylate hydrosoluble ni celle d'un défloculant du type silicate après le conditionnement et avant la flottation. En outre, ce brevet ne décrit ni ne suggère l'utilisation d'un agent blanchissant oxydant avant le conditionnement et d'un agent blanchissant réducteur après la flottation.

Il est également habituel dans certains procédés de la technique antérieure d'ajuster le pH de la barbotine d'argile avant ou pendant la flottation par utilisation d'agents alcalins tels que l'hydroxyde d'ammonium qui peut être considéré comme un défloculant bien qu'il ne soit pas proche de la nature des sels silicates et polyacrylates.

D'autres brevets tels que le brevet U.S. 2 740 522 décrivent l'utilisation de sels polyacrylates tels que le polyacrylate de sodium et le polyacrylate d'ammonium, qui ont des poids moléculaires de 10 000 ou plus et peuvent atteindre un poids moléculaire aussi élevé que 500 000 pour déprimer les vases ou boues pendant la flottation des minerais. Ce brevet indique l'addition de déprimants de vase constitués par des sels polyacrylates avant ou pendant le conditionnement, ce qui éloigne l'homme de l'art de la présente invention, dans laquelle il est d'importance critique d'ajouter le sel polyacrylate dispersant après le conditionnement et avant l'exécution de la flottation. Le brevet ne mentionne pas le traitement d'une matière du type argile et ne s'y rapporte pas. On n'y trouve pas de description ni de suggestion d'un procédé de traitement de l'argile qui utilise en agent blanchissant oxydant avant le conditionnement et la flottation et un agent blanchissant réducteur après le conditionnement et la flottation. En outre, il ne semble pas qu'il y ait dans ce brevet de description de l'utilisation d'agents activateurs. Le brevet U.S. 3 224 582 utilise des particules solides de polyacrylate pendant la flottation par moussage pour jouer le rôle de particules de collecteur destinées à favoriser la stabilisation mécanique de la mousse.

Dans le brevet U.S. 3 599 879, on ajoute un sel polyacrylate à une barbotine d'argile pendant mais non pas après le conditionnement. En outre, on dilue la barbotine d'argile après le conditionnement et avant la flottation et cette dilution se traduit par une consommation indésirable d'énergie, non seulement pour l'introduction de l'eau pour la dilution mais également lorsqu'on l'élimine, lorsqu'on veut isoler ou concentrer l'argile produite.

De nombreux autres brevets, qui comprennent les brevets US—A—3 337 048, US—A—3 353,668, US—A—3 450,257 et US—A—3 744 630 exigent tous une dilution de la barbotine d'argile après le conditionnement et avant la flottation. Aucun de ces brevets ne mentionne la suppression de la phase de dilution qui se traduirait par une économie d'énergie.

L'invention a pour objet un procédé de flottation grâce auquel on peut raffiner des argiles contenant jusqu'à 70% en poids de particules d'une dimension inférieure à 2 micromètres e.s.d. (diamètre sphérique équivalent) pour produire des produits d'une haute brillance ayant de faibles niveaux d'impureté $TiO_2$. Le diamètre sphérique équivalent des particules est mesuré à l'aide d'un analyseur de dimensions de particules connu sous la dénomination de Micromeritics Sedigraph 5 000.

A cette fin, selon l'invention, le procédé de traitement de l'argile pour en éliminer les impuretés minérales à base de titane, ce procédé comprenant les phases consistant à: a) mélanger ladite argile, sous la forme d'une suspension aqueuse ayant une teneur en solides d'argile et desdites impuretés d'au moins 20% en poids, avec un collecteur des impuretés minérales à base de titane, et un activateur comprenant un sel hydrosoluble d'un métal choisi parmi les métaux alcalinoterreux et les métaux lourds; b) conditionner la suspension aqueuse d'argile à une teneur en solides d'au moins 20% en poids pendant un temps suffisant pour y dissiper au moins 25 chevaux-vapeur-heures (18,4 KW/h) d'énergie par tonne de solides; c) soumettre la suspension aqueuse conditionnée ayant une teneur en solides d'au moins 20% à un traitement de flottation par moussage et éliminer les impuretés de titane avec la mousse; et d) récupérer une argile ayant une teneur réduite en impuretés minérales à base de titane, est caractérisé en ce que, avant de mélanger ladite suspension audit collecteur et audit activateur, on blanchit la suspension d'argile avec un agent blanchissant oxydant à un pH d'environ 6 à environ 7, et en ce que, entre l'étape b) de conditionnement et l'étape c) de flottation, on ajoute à la suspension aqueuse d'argile conditionnée un sel polyacrylate dispersant.

On remarquera que les documents US—A—3 450 257 et US—A—3 979 282 décrivent des procédés de traitement des argiles proches du procédé conforme à l'invention. Cependant, non seulement ils ne comportent pas la particularité critique de l'invention consistant à ajouter le sel polyacrylate dispersant

3

**0 104 100**

après le conditionnement et avant la flottation, mais encore, au moins en ce qui concerne le document US—A—3 979 288, ils vont à l'encontre de cette particularité.

En général, dans la mise en oeuvre de l'invention, la suspension aqueuse de la charge d'argile contient au moins environ 20% de solides, de préférence entre environ 25% et 70% de solides. Une teneur en solides d'environ 30 à environ 40% est préférée. On prépare la charge de la façon classique en agitant l'argile avec de l'eau et un agent dispersant, par exemple, de préférence avec des compositions dispersantes à base de silicate de sodium. Normalement, on utilise 0,05 à 0,5% en poids de l'agent dispersant, cette quantité étant basée sur le poids de la charge sèche.

Ensuite, on traite la suspension avec un agent blanchissant oxydant tel que l'hypochlorite de sodium, le sulfate d'ammonium ou le persulfate de potassium, de préférence, le persulfate de sodium, qu'on peut se procurer dans le commerce sous le nom commercial de "Oxone", auprès de DuPont and Co. La quantité d'agent blanchissant utilisée est comprise entre 0,01% et 0,1% en poids, basée sur le poids sec de la charge d'argile aqueuse. Ensuite, on ajuste le pH de la suspension par addition de réactifs alcalins, sur un intervalle de pH d'environ 6 à 7. On laisse l'agent blanchissant oxydant réagir pendant au moins environ 15 heures, par exemple pendant 15 à 24 heures, avant de poursuivre le traitement. La suspension résultante est de préférence tamisée à travers un tamis à mailles de 0,043 mm pour éliminer les impuretés ayant une dimension de particules de plus de 44 micromètres e.s.d. On peut utiliser d'autres agents blanchissants, y compris les composés hydrosolubles minéraux ou organiques qui contiennent dans la molécule de l'oxygène facilement disponible capable de blanchir, tel que le persulfate d'ammonium, le permanganate de potassium, le peroxyde d'hydrogène, etc.

On ajoute à la suspension traitée à un pH de moins de 7 un ion activateur, par exemple l'un quelconque des ions alcalino-terreux, y compris le magnésium, le calcium, le strontium ou le baryum ou l'un quelconque des ions de "métaux lourds" tels que le fer ferreux, le cuivre cuivrique, le manganèse manganeux et le zinc, sous la forme d'un sel tel qu'un chlorure, nitrate, acétate, oxyde, ou de mélanges de sels, à une concentration de 0,005% et à 0,15% ou plus en poids basé sur le poids de la charge sèche (ou 0,05 à 1,5 kg par tonne de solides dans la dispersion ou suspension), de préférence dans l'intervalle de 0,01% à 0,075% en poids (0,1 à 0,75 kg par tonne de solides dans la suspension). On ajoute également un réactif collecteur oléophile anionique à la dispersion avant le conditionnement. De tels réactifs collecteurs comprennent des acides gras ayant 8 à 20 atomes de carbone, l'acide oléique, l'acide linoléique, l'acide laurique, l'huile de suif, l'oléine, les acides gras de l'huile de noix de coco et l'acide sulpho-oléique. Le collecteur anionique préféré est l'acide oléique. Le réactif collecteur est habituellement ajouté dans la proportion de 0,05% à 1,5% en poids de la charge sèche (ou 0,05 à 1,5 kg par tonne de solides dans la suspension), l'intervalle préféré étant de 0,1% à 0,5% (ou 0,1 à 0,5 kg par tonne de solides dans la suspension).

Le conditionnement de la suspension aqueuse d'argile s'effectue après l'addition des ions activateurs et du collecteur. Ce conditionnement s'effectue en agitant le mélange de suspension, ions activateurs et réactif collecteur pendant un temps compris dans l'intervalle de 5 minutes à 180 minutes. Un temps d'environ 10 à 120 minutes est habituellement nécessaire. Pour obtenir les résultats optimaux, il est préférable d'adopter une forte intensité de malaxage, telle que celle qu'on obtient avec un appareil "Kady Mill" fabriqué par Kinetic Dispersion Corp., Buffalo, New York, E.U.A. Le conditionnement correspond à un apport d'énergie d'environ 25 à 1000 CV-h par tonne de charge sèche. Un appareil particulièrement satisfaisant est décrit et revendiqué dans la demande de brevet EP—A—0 104 962 déposée concurrement avec la présente par la Demanderesse et intitulée "Appareil et procédé de conditionnement d'argile à haute intensité".

La suspension aqueuse conditionnée est préparée pour la flottation par l'addition d'un sel polyacrylate dispersant ajouté dans une proportion de 0,05% à 0,3% en poids de la charge sèche (ou 0,5 à 3 kg par tonne de solides dans la suspension), 0,15% à 0,25% en poids de la charge sèche (ou 1,5 à 2,5 kg par tonne) étant la quantité préférée. Le sel de lithium de l'acide polyacrylique est préféré, bien que les sels de sodium et d'ammonium donnent également de bons résultats et qu'on puisse également utiliser les sels de potassium ou des mélanges de plusieurs quelconques des sels mentionnés ci-dessus.

La suspension conditionnée à haute teneur en solides n'est pas diluée pour la flottation comme on le fait dans les procédés de la technique antérieure. On ajuste le pH de la suspension conditionnée, avec l'agent dispersant ajouté, sur la valeur donnant la flottation optimum, qui est de l'intervalle de 6,0 à 8,0; un intervalle préféré est de 7,2 à 7,8 pour la plupart des kaolins mais le pH à adopter pour la flottation dépend de la charge initiale.

Le procédé préféré pour la flottation n'exige pas l'addition d'adjuvants de moussage tels que les agents de moussage utilisés dans la technique antérieure. Le moussage est de préférence conduit dans une cellule de moussage modifiée qui possède la constitution représentée et décrite dans la demande de brevet EP—A—0104099 déposée concurremment avec la présente par la Demanderesse et intitulée "Appareil et procédé de flottation par moussage". On peut également utiliser les cellules de flottation produites industriellement par la Denver CO et la Wemco Co.

Les exemples suivants servent à illustrer la flotation du kaolin et sont donnés opur aider à comprendre l'invention et ne doivent pas être considérés comme limitatifs de l'invention. Dans les exemples, "ppt" signifie livre (0,4536 kg) de réactif par tonne de solides de l'argile. Le pourcentage de dioxyde de titane a été déterminé par fluorescence par rayons X et la brillance (GEB) a été mesurée selon la norme TAPPI Standard

4

# 0 104 100

T-646 OS-75. Tous les autres proportions et pourcentage sont calculés sur la base du poids, sauf spécification contraire. Le sigle TREP signifie procédé d'élimination et d'extraction du titane conforme à l'invention.

Exemple 1

Comparaisons A—E

(A.) Généralités

Dans l'exemple 1 et chacune des comparaisons A—E, on a formé une suspension d'argile à partir d'argile extraite dans la région de Sandersville de Géorgie (E.U.A.). L'argile présentait une granulométrie telle que 50 à 65% des particules étaient inférieures à 2 µm e.s.d. dans la charge de suspension envoyée par pompage à l'installation.

Réactifs utilisés

Acide oléique: nuance alimentaire U.S.P.

Chlorure de calcium: ajouté sous la forme d'une solution aqueuse à 10%.

Silicate de sodium qualité N: environ 37,7% de solides (aqueux).

Polyacrylate de sodium: environ 43% de solides (aqueux). Poids moléculaire d'environ 1500.

Prétraitement de la charge

La suspension d'argile a été traitée avec 1 à 3 ppt d'agent dispersant silicate de Na puis passée à travers un tamis à mailles de 0,061 mm pour l'élimination du mica, du sable et des autres particules grossières. La suspension a été combinée à 20 ppt d'Oxone® (produit de E.I. duPont) comprenant du persulfate de potassium et on a ajusté le pH sur 6,5 à 7,0 à l'aide de NaOH aqueuse. Ensuite, on laisse la suspension à peut près neutre reposer pendant environ 15 à 24 heures avant l'utilisation. Ceci laisse à l'Oxone le temps d'agir sur la matière oxydable éventuellement contenue dans la charge brute. Après la traitement par l'Oxone®, le Ph de la suspension était généralement de 6,5 à 6,8, pH auquel on doit commencer le conditionnement (on a traité avec de bons résultats par le procéde TREP des suspensions ayant une valeur de pH aussi faible que 6,1).

Conditionnement

Le conditionnement de la suspension charge traitée par l'Oxone® a été exécuté en utilisant 0,5 ppt de CaCl$_2$ et 5 ppt d'acide oléique. Les niveaux de pourcentages sont basés sur l'utilisation de réactifs anhydres. Le conditionnement a été exécuté dans la machine Kinetic Dispersion Mill (KADY)® en utilisant 2500 ml d'une charge prétraitée. Le niveau chimique doit être fixé et les produits chimiques mesurés et prêts pour l'addition. On a placé la suspension dans la cellule de la machine KADY® et on a descendu le rotor dans la cellule. Après avoir descendu le rotor, on a mis en marche la machine KADY® et ajouté immédiatement les réactifs.

On a laissé la suspension se conditionner pendant 20 minutes et la température finale était d'environ 82°C. Le pH après conditionnement devrait être de l'intervalle de 6,1 à 6,3.

Elimination du complexe acide oléique-impuretés à base de TiO$_2$ et post traitement

On a placé les 2500 ml de suspension conditionnée dans une cellule Denver et on a dilué à 4 litres au moyen d'eau du robinet. Les solides étaient à peu près de l'intervalle de 20 à 30%. On a ajouté du polyacrylate de sodium dans la quantité de 4 ppt en tant que dispersant d'après conditionnement. On a laissé ce dispersant se mélanger dans la suspension pendant quelques minutes avant de commencer le moussage. Après l'addition de polyacrylate, on a ajouté du HCl dilué pour abaisser le pH à une valeur de 6,2 à 6,5 et on a commencé le moussage. On a fait travailler la cellule Denver à 1250 tr/mn pendant 45 minutes. Pendant la poursuite du moussage, le pH était porté à une valeur maximum de 7,8 si cela était nécessaire pour améliorer l'élimination des impuretés. Tous les ajustements du pH effectués pendant le moussage ont été exécutés par abaissement du pH à l'aide de HCl dilué (4:1) par une élévation du pH à l'aide de NH$_4$OH dilué (9:1).

Lorsque les impuretés ont été éliminées, on a dilué les solides de la suspension à 10% et isolé les produits. Le produit non fractionné à été floculé à l'aide de H$_2$SO$_4$ à 10% et blanchi à l'aide de 15 ppt de K-Brite (nom commercial d'hyposulfite de sodium). Les produits non fractionnés ont été filtrés et séchés par micro-ondes.

La brillance TAPPI a été mesurée sur un appareil d'essai de brillance Technidyne S-4 Brightness Tester et l'analyse de TiO$_2$ a été déterminée par fluorescence par rayons X.

(B.) Exemple 1 montrant la supériorité du dispersant polyacrylate sur les autres dispersants, comparaisons A—C, en addition à la suspension après la phase de conditionnement mais avant la phase de flottation

Dans l'exemple 1 et les comparaisons A—C, la suspension de charge utilisée était une argile brute de Sandersville à 36% de solides, qui était une argile compacte dense extraite de la mine Cheeves et qui était dispersée à l'aide de 2,7 ppt de silicate de sodium qualite "N".

La suspension de charge a été conditionnée dans une machine KADY pendant 20 minutes en utilisant les réactifs indiqués dans (A.) ci-dessus. Des parties de la suspension conditionnée ont été traitées avec différents dispersants avant la flottation. On a écrit un échantillon témoin qui ne contenait pas de dispersants ajoutés. Le produit a été isolé par floculation à l'aide d'acide sulfurique dilué, à un pH d'environ 3,0, par blanchiment réducteur de l'argile à l'aide d'hyposulfite de sodium, à un niveau de 15 ppt, filtration et séchage. L'échantillon sec a été analysé pour la teneur en $TiO_2$ et le GEB a été mesuré sur l'appareil d'essai de brillance.

L'efficavité du procédé TREP est mesurée par la quantité de dioxyde de titane qui reste dans l'échantillon après la flottation et la quantité présente dans la charge.

Les résultats de cette expérience sont donnés au tableau I.

TABLEAU I

Efficacité de différents dispersants sur la flottation

| Ex. No. | Désignation du dispersant | Dosage (ppt) | $TiO_2$ en % du produit | GEB | Elimination de $TiO_2$ en % |
|---|---|---|---|---|---|
| — | Charge | — | 1,76 | 84,7 | — |
| A | Témoin | 0 | 1,12 | 86,0 | 36,4 |
| B | TSPP/$Na_2CO_3$* | 2 | 1,06 | 86,8 | 39,8 |
| C | Silicate de Na | 2 | 0,95 | 87,3 | 46,0 |
| I | Polyacrylate de Na | 2 | 0,53 | 89,1 | 69,9 |

*Mélange de TSPP, pyrophosphate tétrasodique et de $Na_2CO_3$ à un niveau poids-poids de 60 TSPP/40 $Na_2CO_3$, qui est un dispersant très communément utilisé pour le kaolin.

Les résultats montrent qu'on n'obtient aucune amélioration significative comparativement au témoin, ni avec le silicate de sodium, ni avec le mélange TSPP/$Na_2CO_3$. Au contraire, le type de dispersant polyacrylate à donné une amélioration du facteur 2.

(C.) Comparaisons D et E montrant l'effet nuisible de l'addition d'un dispersant du type polyacrylate au stade de conditionnement du procédé

Dans ces comparaisons, la charge utilisée était une suspension à 38,7% de solides d'une argile brute de Sandersville, qui était une argile grumeleuse, sableuse, de la mine Harrison et qui était dispersée avec 2,3 ppt de silicate de sodium de qualité "N".

Ces comparaisons ont été effectuées pour montrer l'effet nuisible des dispersants polyacrylates sur la phase de conditionnement. On a essayé un témoin (comparaison D) qui ne contenait aucune addition de dispersant pendant la phase de conditionnement. Le deuxième essai (comparaison E) contenait 1,7 ppt de dispersant polyacrylate de sodium dans la suspension de charge. Le conditionnement s'effectuait en agitant dans une machine KADY pendant 20 minutes comme décrit plus haut. La phase de flottation a été exécutée dans une cellule de flottation Denver comme dévrit plus haut, en faisant passer de l'air à travers la suspension. Le produit a été isolé par le mode normal de floculation, blanchiment réducteur, filtration et séchage. Les échantillons secs ont été analysés pour la détermination du % $TiO_2$ et on a mesuré GEB.

Les résultats des deux comparaisons sont donnés au tableau II.

TABLEAU II

Effet du dispersant polyacrylate sur le conditionnement

| Ex. No. | Désignation | Dosage (ppt) | % $TiO_2$ produit | GEB | % élimination de $TiO_2$ |
|---|---|---|---|---|---|
| — | Charge | — | 1,83 | 85,6 | — |
| D | Témoin | 0 | 0,53 | 90,9 | 71,0 |
| E | Polyacrylate de Na | 1,7 | 1,50 | 87,0 | 18,0 |

Les résultats montrent nettement que l'addition d'un polyacrylate dispersant avant le conditionnement est très préjudiciable à l'élimination du $TiO_2$. Une comparaison des résultats de l'exemple E qui utilise le sel polyacrylate de Na ajouté avant le conditionnement, avec le témoin dans lequel on n'utilise pas de dispersant, montre que l'utilisation du polyacrylate dispersant pendant le conditionnement ne fournit qu'un quart de l'élimination de $TiO_2$ obtenu lorsqu'on n'ajoute aucun dispersant pendant le conditionnement ou entre le conditionnement et la flottation.

# 0 104 100

Exemple 2

Haut niveau chimique de conditionnement

On tamise une charge de 946,25 l d'un kaolin dispersé par le silicate de sodium, provenant du Comté de Washington, Géorgie, E.U.A., à travers un tamis à mailles de 0,043 mm, pour donner une suspension ayant une teneur de 35% de solides et une granulométrie telle que 62% des particules ont moins de 2 µm. La suspension a été traitée par un agent blanchissant oxydant, le persulfate de potassium (Oxone) à un niveau de 1 ppt d'argile sèche et on a ajusté le pH de la suspension sur 6,7 à l'aide d'une solution d'hydroxyde de sodium à 50% en poids. La quantité totale de base utilisée était de 0,24 ppt d'argile sèche. La charge totale de suspension d'argile a été agitée à la température ambiante pendant 20 heures avant l'exécution de la phase de conditionnement.

On a floculé une petite partie de la suspension par addition d'acide sulfurique, jusqu'à un pH de 3, traité par l'agent blanchissant réducteur, l'hyposulfite de sodium, à un niveau de 15 ppt, filtré et séché, pour donner une argile ayant une teneur en $TiO_2$ de 1,73% et une brillance TAPPI de 83,5. Cet échantillon représente un témoin pour l'argile non fractionnée.

On a dilué une autre partie de la suspension initiale (c'est-à-dire avant le blanchiment oxydant) à une teneur de 10% de solides et on l'a laissée déposer par gravité à un taux de 45 minutes par unité de 25,4 mm de profondeur de la suspension. La fraction kaolin à grain fin décantée avait une granulométrie telle que 92% des particules avaient moins de 2 µm. Le traitement par l'acide sulfurique amenant à un pH de 2,8 a provoqué une floculation et, après un traitement par l'hyposulfite de sodium à un niveau de 10 ppt d'argile sèche, filtration et séchage, l'échantillon avait une analyse de 2,21% $TiO_2$ et une brillance TAPPI de 86,2. Cet échantillon représente un témoin pour la fraction grille fine.

### Sans conditionnement ni flottation

| Argile | % $TiO_2$ | Brillance |
|---|---|---|
| Non fractionnée | 1,73 | 83,5 |
| Fraction fine | 2,21 | 86,2 |

Le conditionnement de la suspension oxydée après l'addition du chlorure de calcium et de l'oxyde de calcium, chacun à un niveau de 0,05% en poids (1 ppt) et d'acide oléique à un niveau de 1,0% en poids (20 ppt) basé sur l'argile sèche a été exécuté dans une machine modifiée à haut cisaillement pendant une période de 150 minutes, ce qui se traduit par un apport d'environ 300 chevaux-vapeur-heures par tonne d'argile sèche. La température finale de la suspension était de 58,3°C et le pH était de 6,9.

La suspension non diluée a été transférée à une cellule de moussage et on a ajouté le sel de lithium d'un acide polycarboxylique servant de dispersant, ayant un poids moléculaire de 1500, en une quantité qui correspondait à 4 ppt d'argile sèche. Le pH de la suspension chaude a été maintenu dans l'intervalle de 7,0 à 7,6 par addition intermittente d'hydroxyde d'ammonium. Le moussage a été réalisé en faisant barboter de l'air à travers la suspension agitée pendant environ 2 heures et par raclage de la mousse d'une couleur sombre sur la face supérieure de la suspension.

Un échantillon de la suspension produite a été acidifé, blanchi par l'hyposulfite de sodium à un niveau de 10 ppt d'argile sèche, filtré et séché. L'analyse du produit a révélé une teneur en $TiO_2$ de 0,16%, ce qui indique que 90,7% du $TiO_2$ fortement coloré avaient été éliminés. La brillance TAPPI de ce kaolin non fractionné était de 89,8, ce qui représente un accroissement de 6,3 points de brillance sur la brillance de l'argile qui n'avait pas été conditionnée ni soumise à la flottation.

On a isolé un produit kaolin à grain fin d'un échantillon de la suspension moussée après la flottation en diluant ladite suspension à un niveau de 10% de solides et en la faisant déposer par gravité à une vitesse de 45 minutes par unité de 25,4 mm de profondeur de la suspension. La fraction fine de la suspension était décantée, acidifiée à un pH de 3,0, blanchie par l'hyposulfite de sodium à 10 ppt d'argile sèche, filtrée, séchée et analysée. L'analyse a révélé une teneur en $TiO_2$ de 0,21%, ce qui correspond à une élimination de 90,5% du niveau initial de $TiO_2$. La brillance TAPPI de la fraction kaolin fine était de 92,0, soit un accroissement de 5,8 points de brillance.

### Conditionnée et flottée

| Argile | % $TiO_2$ | Brillance | % $TiO_2$ éliminé |
|---|---|---|---|
| Non fractionnée | 0,16 | 89,8 | 90,7 |
| Fraction fine | 0,21 | 92 | 90,5 |

Exemple 3

Niveau chimique moyen de conditionnement

On a préparé une autre suspension de kaolin provenant du Comté de Washington, Géorgie, E.U.A., en

7

utilisant un dispersant silicate de sodium. Le prétraitement par le persulfate de potassium et une base donnant un pH de suspension de 5,4 a été exécuté comme décrit à l'exemple 2. La fraction non fractionnée et la fraction fine ont été isolées comme décrit à l'exemple 2 et ont donné l'analyse suivante.

### Sans conditionnement ni flottation

| Argile | % TiO$_2$ | Brillance TAPPI |
|---|---|---|
| Non fractionnée | 1,71 | 81,6 |
| Fraction fine | 2,19 | 83,3 |

Le conditionnement de la suspension a été exécuté comme à l'exemple 2 mais avec les niveaux suivants pour les additifs chimiques: 0,0625% (0,125 ppt) pour le chlorure de calcium et pour l'oxyde de calcium et 0,125% (2,5 ppt) d'acide oléique. Le temps de conditionnement était de 3 heures, avec un apport de 328 chevaux-vapeur-heures/tonne d'argile sèche (HPH). La température finale était de 96,7°C et le pH de la suspension était de 5,8. On a ajouté le dispersant polyacrylate de sodium ayant un poids moléculaire de 1500 à un niveau de 4 ppt d'argile sèche et on a fait mousser la suspension comme précédemment à 35% de teneur en solides. Les produits moussés ont été analysés, ce qui a donné les résultats indiqués ci-dessous:

### Conditionné et flotté

| Argile | % TiO$_2$ | Brillance TAPPI | % TiO$_2$ éliminé |
|---|---|---|---|
| Non fractionnée | 0,44 | 87,1 | 74,3 |
| Fraction fine | 0,67 | 90,6 | 69,4 |

Exemple 4
Faible niveau chimique de conditionnement

Cet exemple montre également la variation possible du niveau de produits chimiques qui donne des résultats satisfaisants dans toute l'utilisation de la présente procédure de flottation.

On a dispersé une suspension de kaolin provenant du Comté de Washington, Géorgie, E.U.A., avec du silicate de sodium à un niveau de solides de 35,8% et on l'a prétraitée avec un agent blanchissant oxydant (persulfate de potassium) au niveau indiqué à l'exemple 2 et en utilisant les procédures données à l'exemple 2. Le pH de la suspension a été ajusté sur 6,7. L'isolation d'échantillons non fractionnés et d'échantillons à grain fin a été exécutée comme décrit à l'exemple 2 et a donné les analyses suivantes:

### Sans conditionnement ni flottation

| Argile | % TiO$_2$ | Brillance TAPPI |
|---|---|---|
| Non fractionnée | 1,67 | 86,3 |
| Fraction fine | 2,15 | 88,6 |

Les produits chimiques conditionnés ont été ajoutés au niveau suivant: 0,003125% (0,0625 ppt) de chlorure de calcium, et le même pourcentage d'oxyde de calcium, avec un niveau de 0,05% (1 ppt) pour l'acide oléique.

Le conditionnement dans une machine à haut cisaillement pendant 2,5 heures s'est traduit par un apport de 305 CVh/tonne d'argile sèche. La température finale de la suspension était de 60°C et la suspension avait un pH de 6,8. L'exécution du moussage sur la suspension non diluée après l'addition du dispersant polyacrylate de sodium en une quantité de 4 ppt, d'un poids moléculaire de 1500, a donné des produits kaolins non fractionnés et à grain fin isolés selon la procédure de l'exemple 2. Les produits ont été analysés et les résultats sont donnés ci-dessous:

### Conditionné et flotté

| Argile | % TiO$_2$ | Brillance TAPPI | % TiO$_2$ éliminé |
|---|---|---|---|
| Non fractionnée | 1,00 | 89,3 | 40,1 |
| Fraction fine | 1,33 | 90,5 | 38,1 |

Exemple 5

Cet exemple montre comment ledit procédé utilisant un polyacrylate d'ammonium avec un poids moléculaire moyen de 1500 peut être utilisé pour améliorer la qualité d'autres produits qui sont normalement isolés dans l'amélioration du kaolin.

Une charge de kaolin provenant de Comté de Washington, Géorgie, E.U.A., a été mise sous la forme d'une suspension et prétraitée comme décrit à l'exemple 2. La suspension de charge non fractionnée avait un pH ajusté sur 6,8, une distribution de dimensions de particules de 61% <2 µm et une teneur en solides de 35,1%. Les échantillons témoins ont été isolés comme décrit à l'exemple 2 et ont donné les analyses suivantes:

Sans conditionnement ni flottation

| Argile | % TiO$_2$ | Brillance TAPPI |
|---|---|---|
| Non fractionnée | 1,73 | 83,5 |
| Fraction fine | 2,21 | 86,2 |

Cette suspension de charge comportait une addition d'un niveau chimique, basée sur le poids de l'argile sèche, de 0,0625% (0,125 ppt) pour le chlorure de calcium et pour l'oxyde de calcium, tandis que l'acide oléique était ajouté à un niveau de 0,125% (2,5 ppt). On a fait travailler une unité de conditionnement modifiée pendant 3,5 heures, temps pendant lequel la température s'est élevée de 37,8°C à 87,8°C. On a calculé que l'énergie pour le conditionnement était de 381 CVh/tonne d'argile sèche. La suspension conditionnée a été transférée à une cuve de moussage et on a ajouté un polyacrylate d'ammonium ayant un poids moléculaire moyen de 1500 à un niveau de 4 ppt d'argile sèche pour garantir l'obtention d'une suspension bien dispersée. La suspension a été aérée dans une cellule de flottation pendant 3 heures pour l'élimination des impuretés hydrophobes puis séparée dans une centrifugeuse Tolhurst pour donner un rendement de 50% de la fraction grossière et de la fraction fine, ayant respectivement une distribution de dimensions de particules de 19% et 91% de moins de 2 µm.

Les analyses pour ces deux fractions ont été les suivantes:

Conditionné et flotté

| Fraction | % TiO$_2$ | Brillance TAPPI | % TiO$_2$ éliminé |
|---|---|---|---|
| Grossière | 0,13 | 86,6 | 92,5 |
| Fine | 0,27 | 91,1 | 87,8 |

La fraction fine correspond à une argile de nuance de couchage n° 1 et on l'a floculée avec de l'acide sulfurique à un niveau de pH de 2,8, blanchie à l'aide de 15 ppt d'hyposulfite de sodium filtrée et séchée. Les gateaux séchés ont été redispersés pour former une suspension à 70% de solides appropriée pour l'utilisation industrielle.

La fraction grossière a été diluée à 35% de solides, mélangée à un volume égal de perles de styrène-divinylbenzène et délaminée en utilisant une pale de rotor conique à 1500 tr/mn pendant 30 minutes comme décrit dans le brevet US 3 171 718. Les perles utilisées pour la délamination ont été éliminées par tamisage de la suspension à travers un tamis à mailles de 0,147 mm. La suspension tamisée a été diluée à 20% de solides puis on l'a laissée déposer par gravité au taux de 50 minutes/unité de 25,4 mm de profondeur de suspension. La dimension de particules du produit délaminé décanté était de 81% de moins que 2 µm e.s.d. La suspension décantée a été floculée à l'aide d'un acide, blanchie par le dithionite de sodium à 10 ppt d'argile sèche, filtrée et séchée. Le produit a donné l'analyse suivante:

Produit de flottation

| | |
|---|---|
| % TiO$_2$ | 0,13 |
| Brillance TAPPI | 91,4 |
| Brillance Twist | 95,8 |

Les valeurs moyennes pour les argiles non flotatées, non traitées, délaminées, sont d'environ 1,05% TiO$_2$ et environ 87—89 brillance TAPPI.

Exemple 6
Calcination

Les kaolins décrits dans les exemples ci-dessus peuvent être déshydroxylés dans l'intervalls de température de 704 à 1038°C pour produire des argiles ayant des propriétés souhaitables pour certaines applications. Pour déterminer l'effet que le traitement de flottation décrit dans cette invention exerce sur la brillance des produits calcinés produits par ce procédé, on a calciné à différentes températures, dans un four à moufles pendant 2 heures le produit argile délaminé, flotté, de l'exemple 5 (possédant 0,13% $TiO_2$, une brillance TAPPI de 91,4 et une brillance Twist de 95,8). On a préparé une série témoin de produits calcinés à partir de l'argile non flottée, non traitée, délaminée, d'une façon identique. Les résultats sont donnés au tableau III.

TABLEAU III

| Température de calcination (°C) | Brillance TAPPI | Dimensions de particules (%<2 µm) | Abrasion* (mg/10⁵ revs) |
|---|---|---|---|
| Charge flottée traitée (ex. 5) | 91,4 | 81,0 | — |
| 704 | 92,0 | 61,5 | 9 |
| 816 | 93,9 | 54,5 | 6 |
| 927 | 95,8 | 47,0 | 9 |
| 1016 | 96,0 | 47,0 | 7 |
| Charge non flottée non traitée | 88 | 82 | — |
| 704 | 82,5 | 64 | 14 |
| 816 | 86,5 | 62,5 | 18 |
| 927 | 91,1 | 60 | 18 |
| 1016 | 93,0 | 58 | 24 |

*Mesuré sur un appareil d'abrasion Einlehner.

Les résultats montrent l'amélioration très significative de la brillance TAPPI et la plus faible abrasion des produits calcinés préparés à partir d'un kaolin traité par le procédé décrit dans cette invention. Dans les charges flottées, traitées, calcinées à une température de 704 à 1016°C, la brillance TAPPI s'est élevée de 92 (calcination à 704°C) jusqu'à 96 (calcination à 1016°C), bien que le pourcentage de dimensions de particules inférieur à 2 µm ait diminué, c'est-à-dire que les produits soient devenus plus grossiers avec l'accroissement de la température de calcination. Une constation encore plus surprenante consiste en ce que l'abrasion est extrêmement faible et restait faible au fur et à mesure de l'accroissement de la température de calcination, de 704 à 1016°C. Ceci étant en opposition directe par rapport à l'argile non flottée non traitée, dont l'abrasion s'est accrue de 14, à 704°C, à 24 à 1016°C. Une argile ayant une abrasion de 24 mg/10⁵ revs. est très abrasive et détériorerait en un temps très court la lame docteur d'une machine de couchage.

Exemple 7

On traite à l'échelle de la production industrielle une suspension d'argile extraite dans la région de Sandersville de Géorgie, E.U.A., ayant une distribution de dimensions de particules telles que 50 à 65% de celles-ci ont moins de 2 µm, avec 1 à 3 ppt d'un agent dispersant silicate de sodium. On fait passer la suspension résultante à travers un tamis à mailles de 0,061 mm pour éliminer le mica, le sable et les autres particules grossières. On combine ensuite la suspension tamisée avec 1 ppt d'Oxone (persulfate de potassium) et on ajuste son pH sur 6,5 à 7,0 à l'aide d'hydroxyde de sodium. On laisse la suspension résultante reposer pendant environ 15 heures, par exemple pendant 15 à 24 heures, pour laisser l'Oxone agir sur la matière oxydable contenue dans la suspension. A la fin du traitement par l'Oxone, le pH de la suspension est d'environ 6,5 à 6,8.

On chauffe la suspension à environ 27 à 38°C et on ajoute 0,25 à 0,5 ppt de chlorure de calcium sous la forme d'une solution aqueuse à 20%. On refoule le mélange de suspension résultant par pompage dans le premier d'une série de cinq conditionneurs que possède la construction décrite et revendiquée dans la demande de brevet déposée concurremment avec la présente et intitulée "Appareil et procédé de conditionnement d'argile à haute intensité", de la même Demanderesse. On ajoute l'acide oléique, en une

10

quantité de 1,5 à 2,5 ppt, à la suspension dans le premier conditionneur et on conduit le conditionnement avec un temps total de séjour de 50 à 120 minutes dans la série des cinq conditionneurs. On ajuste le débit de manière que la suspension sorte du cinquième conditionneur 50 à 120 minutes après être passée dans le premier conditionneur.

Après évacuation du cinquième conditionneur, on mélange la suspension avec 2,5 à 4 ppt de polyacrylate de sodium ayant un poids moléculaire de 1500 puis on la refoule dans la première de cinq cuves de flottation par moussage. A ce stade, le pH de la suspension est de l'intervalle de 5,5 à 6,5 et sa température est d'environ 71 à 82°C. Les cuves de flottation par moussage sont du type décrit dans la demande de brevet déposée concurremment avec la présente par la Demanderesse et intitulée "Appareil et procédé de flottation par moussage". Le temps de séjour de la suspension passant à travers la série de cuves de flottation est de 3 à 5 heures, ce qui représente le temps qui s'est écoulé de l'instant où la suspension pénètre dans la première cuve de flottation à l'instant où la suspension de produit argile sort de la quatrième cuve de flottation.

La mousse sortant de la première cuve est rejetée. Le produit récupéré à la base de la première cuve de flottation est envoyé comme charge dans la deuxième cuve de flottation et on y ajoute suffisamment d'hydroxyde de sodium pour élever le pH à l'intervalle de 7,2 à 7,8. Le pH placé dans cet intervalle améliore la stabilité de la mousse puisque la mousse tend à être moins instable aux pH plus bas, bien que, dans la première cuve, il y ait de plus grandes quantités d'activateur et de conditionneur pour supprimer l'instabilité de la mousse due à un pH acide. En outre le pH alcalin régnant dans la deuxième cuve contribue à éliminer l'acide oléique.

Le produit de la deuxième cuve passe ensuite dans la troisième et la quatrième cuves de flottation et le produit sortant de la quatrième cuve est envoyé au stockage de produit ou à un autre traitement. Les mousses éliminées par flottation de la deuxième, de la troisième et de la quatrième cuves sont combinées et envoyées dans la cinquième cuve de flottation. Ces mousses sont préalablement hydratées dans les canaux de coulée de la deuxième, de la troisième et de la quatrième cuves respectivement, de sorte qu'elles constituent des solutions diluées. La mousse sortant de la cinquième cuve de flottation est rejetée et on recycle le produit provenant de la cinquième cuve de flottation dans la deuxième cuve de flottation par moussage.

**Revendications**

1. Procédé de traitement de l'argile pour en éliminer les impuretés minérales à base de titane, ce procédé comprenant les phases consistant à: a) mélanger ladite argile, sous la forme d'une suspension aqueuse ayant une teneur en solides d'argile et desdites impuretés d'au moins 20% en poids, avec un collecteur des impuretés minérales à base de titane, et un activateur comprenant un sel hydrosoluble d'un métal choisi parmi les métaux alcalino-terreux et les métaux lourds; b) conditionner la suspension aqueuse d'argile à une teneur en solides d'au moins 20% en poids pendant un temps suffisant pour y dissiper au moins 25 chevaux-vapeur-heures (18,4 KW/h) d'énergie par tonne de solides; c) soumettre la suspension aqueuse conditionnée ayant une teneur en solides d'au moins 20% à un traitement de flottation par moussage et éliminer les impuretés de titane avec la mousse; et d) récupérer une argile ayant une teneur réduite en impuretés minérales à base de titane, caractérisé en ce que, avant de mélanger ladite suspension d'argile audit collecteur et audit activateur, on blanchit la suspension d'argile avec un agent blanchissant oxydant à un pH d'environ 6 à environ 7, et.en ce que, entre l'étape b) de conditionnement et l'étape c) de flottation, on ajoute à la suspension aqueuse d'argile conditionnée un sel polyacrylate dispersant.

2. Procédé selon la revendication 1, caractérisé en ce que ladite phase de conditionnement (b) est exécutée dans une cuve de conditionnement et la suspension d'argile conditionnée résultante est transférée à un dispositif de flottation par moussage, dans lequel on exécute les phases suivantes.

3. Procédé selon la revendication 1, caractérisé en ce que ledit agent blanchissant oxydant est le monopersulfate de sodium.

4. Procédé selon la revendication 1, caractérisé en ce que le sel polyacrylate dispersant est le sel de lithium.

5. Procédé selon la revendication 1, caractérisé en ce que le sel polyacrylate dispersant est le sel de sodium.

6. Procédé selon la revendication 1, caractérisé en ce que le sel polyacrylate dispersant est le sel d'ammonium.

7. Procédé selon la revendication 2, caractérisé en ce que la suspension traitée par la flottation par moussage est éliminée du dispositif de flottation par moussage, et en ce que l'on fait barboter de l'air dans la suspension éliminée qui est alors recyclée dans la phase de flottation par moussage.

8. Procédé selon la revendication 1, caractérisé en ce que, avant le blanchiment, ladite suspension d'argile est dispersée à l'aide d'un dispersant.

9. Procédé selon la revendication 8, caractérisé en ce que ledit dispersant est le silicate de sodium.

10. Procédé selon la revendication 4, caractérisé en ce que ledit collecteur est l'acide oléique et ledit activateur comprend de l'oxyde de calcium et/ou du chlorure de calcium.

11. Procédé selon la revendication 4, caractérisé en ce que ledit collecteur est l'acide oléique et ledit activateur est un composé ferreux.

12. Procédé selon la revendication 4, caractérisé en ce que ladite argile contient des impuretés minérales à base de fer et ledit activateur est un sel ferreux formé in situ par addition d'un agent réducteur en remplacement d'une certaine partie ou de la totalité dudit activateur dans la phase (a).

13. Procédé selon la revendication 12, caractérisé en ce que ledit agent réducteur est l'hyposulfite de sodium.

14. Procédé selon la revendication 4, caractérisé en ce que, après ladite flottation par moussage, ladite suspension est floculée et blanchie à l'aide d'un agent réducteur.

15. Procédé selon la revendication 14, caractérisé en ce que ladite suspension est floculée à l'aide d'acide sulfurique et ledit agent blanchissant réducteur est l'hyposulfite de sodium.

16. Procédé selon la revendication 14, caractérisé en ce que, avant la floculation et le blanchiment réducteur, on laisse ladite suspension se déposer et on la déshydrate par décantation.

17. Procédé selon la revendication 4, caractérisé en ce que ladite phase de conditionnement est exécutée à un pH inférieur à 7.

18. Procédé selon la revendication 17, caractérisé en ce que la première étape de ladite phase de flottation est exécutée à un pH acide et on utilise un pH alcalin dans les étapes suivantes de ladite phase de flottation.

## Patentansprüche

1. Verfahren zum Behandeln von Ton, un daraus die mineralischen Verunreinigungen auf Basis von Titan zu entfernen das die folgenden Stufen umfaßt:

(a) Mischen des Tons in Form einer wäßrigen Suspension mit einem Feststoffgehalt an Ton und den genannten Verunreinigungen von mindestens 20 Gew.-% mit einem Sammler für die mineralischen Verunreinigungen auf Basis von Titan und einem Aktivator, der ein wasserlösliches Salz eines Metalls aus der Gruppe der Erdalkalimetalle und Schwermetalle umfaßt;

(b) Konditionieren der wäßrigen Tonsuspension bis zu einem Feststoffgehalt von mindestens 20 Gew.-% innerhalb eines Zeitraumes, der ausreicht, um mindestens 25 PS Dampf-Stunden (18,4 KW/h) Energie pro Tonne der Feststoffe zuzuführen;

(c) Durchführung einer Flotationsbehandlung durch Verschäumen mit der wäßrigen Suspension, die auf einen Feststoffgehalt von mindestens 20% konditioniert worden ist, und Entfernen der Titanverunreinigungen zusammen mit dem Schaum; und

(d) Zurückgewinnen eines Tons mit einem verminderten Gehalt an mineralischen Verunreinigungen aus Basis von Titan, dadurch gekennzeichnet, daß man die Tonsuspension vor dem Mischen mit dem Sammler und mit der Aktivator mit einem oxidierenden Bleichmittel bei einem pH-Wert von etwa 6 bis etwa 7 bleicht und daß man zwischen der Konditionierstufe (b) und der Flotationsstufe (c) der konditionierten wäßrigen Tonsuspension ein Polyacrylatsalz-Dispergiermittel zusetzt.

2. Verfahren nach Anspruch 1, dadurch gekennzeichnet, daß die Konditionierstufe (b) in einem Konditionierbehälter durchgeführt wird und daß die resultierende konditionierte Tonsuspension in eine Einrichtung zur Flotation durch Verschäumen überführt wird, in der die folgenden Stufen durchgeführt werden.

3. Verfahren nach Anspruch 1, dadurch gekennzeichnet, daß es sich bei dem oxidierenden Bleichmittel um das Natriummonopersulfat handelt.

4. Verfahren nach Anspruch 1, dadurch gekennzeichnet, daß es sich bei dem Polyacrylatsalz-Dispergiermittel um das Lithiumsalz handelt.

5. Verfahren nach Anspruch 1, dadurch gekennzeichnet, daß es sich bei dem Polyacrylatsalz-Dispergiermittel um das Natriumsalz handelt.

6. Verfahren nach Anspruch 1, dadurch gekennzeichnet, daß es sich bei dem Polyacrylatsalz-Dispergiermittel um das Ammoniumsalz handelt.

7. Verfahren nach Anspruch 2, dadurch gekennzeichnet, daß die durch die Flotation durch Verschäumen behandelte Suspension aus der Einrichtung zur Flotation durch Verschaumen eliminiert wird und daß man Luft in die eliminierte Suspension einperlen läßt, die danach in die Stufe der Flotation durch Verschäumen zurückgeführt wird.

8. Verfahren nach Anspruch 1, dadurch gekennzeichnet, daß die Tonsuspension vor dem Bleichen mit Hilfe eines Dispergiermittels dispergiert wird.

9. Verfahren nach Anspruch 8, dadurch gekennzeichnet, daß es sich bei dem Dispergiermittel um Natriumsilikat handelt.

10. Verfahren nach Anspruch 4, dadurch gekennzeichnet, daß es sich bei dem Sammler um Ölsäure handelt und daß der Aktivator Calciumoxid und/oder Calciumchloride umfaßt.

11. Verfahren nach Anspruch 4, dadurch gekennzeichnet, daß es sich bei dem Sammler um Ölsäure handelt und daß es sich bei dem Aktivator um eine Eisen (II) verbindung handelt.

12. Verfahren nach Anspruch 4, dadurch gekennzeichnet, daß der Ton mineralische Verunreinigungen auf Basis von Eisen enthält und daß es sich bei dem Aktivator um ein Eisen (II) sals handelt, das in situ gebildet worden ist durch Zugabe eines Reduktionsmittels als Ersatz für die Gesamtmenge oder einen bestimmten Teil des Aktivators in der Stufe (a).

13. Verfahren nach Anspruch 12, dadurch gekennzeichnet, daß es sich bei dem Reduktionsmittel um Natriumhyposulfit handelt.

14. Verfahren nach Anspruch 4, dadurch gekennzeichnet, daß die Suspension nach der Flotation durch Verschäumen ausgeflockt und gebleicht wird mittels eines Reduktionsmittels.

15. Verfahren nach Anspruch 14, dadurch gekennzeichnet, daß die Suspension mit Schwefelsäure ausgeflockt wird und daß es sich bei dem reduzierenden Bleichmittel um Natriumhyposulfit handelt.

16. Verfahren nach Anspruch 14, dadurch gekennzeichnet, daß man die Suspension vor dem Ausflocken und vor dem Bleichen mit dem Reduktionsmittel absitzen läßt und sie durch Dekantation entwäßert.

17. Verfahren nach Anspruch 4, dadurch gekennzeichnet, daß die Konditionierstufe bei einem pH-Wert unter 7 durchgeführt wird.

18. Verfahren nach Anspruch 17, dadurch gekennzeichnet, daß die erste Phase der Flotationsstufe bei einem sauren pH-Wert durchgeführt wird und daß man in den folgenden Phasen der Flotationsstufe einen alkalischen pH-Wert anwendet.

**Claims**

1. A method of treating clay to remove therefrom titanium mineral impurities, said method comprising the steps of:
a) mixing said clay in the form of an aqueous slurry having a solids content of clay and said impurities of at least 20% by weight with a collector for the titanium mineral impurities, and an activator comprising a water-soluble salt of a metal chosen from the alkaline earth metals and the heavy metals;
b) conditioning the aqueous clay slurry at a solids content of at least 20% by weight for a time sufficient to dissipate therein at least 25 horsepower hours (18,4 kW/h) of energy per ton of solids;
c) subjecting the conditioned aqueous slurry having a solids content of at least 20 wt.% to a froth flotation process and removing titanium impurities with the froth; and
d) recovering clay having a reduced titanium minerals impurities content,
characterized in that prior to mixing said clay slurry with said collector and activator, said clay slurry is bleached with an oxidative bleach at a pH of about 6 to about 7, and in that between the step b) of conditioning and the step c) of flotation, a polyacrylate salt deflocculant is added to the conditioned aqueous clay slurry.

2. Method as claimed in claim 1, characterized in that said conditioning step (b) is carried out in a conditioning vessel and the resulting conditioned clay slurry is transferred to a froth flotation device wherein the subsequent steps are carried out.

3. Method as claimed in claim 1, characterized in that said oxidative bleach is sodium monopersulfate.

4. Method as claimed in claim 1, characterized in that said polyacrylate salt deflocculant is the lithium salt.

5. Method as claimed in claim 1, characterized in that the polyacrylate salt deflocculant is the sodium salt.

6. Method as claimed in claim 1, characterized in that the polyacrylate salt deflocculant is the ammonium salt.

7. Method as claimed in claim 2, characterized in that slurry treated by the froth flotation is removed from the froth flotation device and in that air is bubbled into the removed slurry which then is recycled to the froth flotation step.

8. Method as claimed in claim 1, characterized in that prior to bleaching said clay slurry is dispersed with a dispersant.

9. Method as claimed in claim 8, characterized in that said dispersant is sodium silicate.

10. Method as claimed in claim 4, characterized in that said collector is oleic acid and said activator includes calcium oxide and/or calcium chloride.

11. Method as claimed in claim 4, characterized in that said collector is oleic acid and said activator is a ferrous compound.

12. Method as claimed in claim 4, characterized in that said clay contains iron mineral impurities and said actiavator is a ferrous salt formed in situ by adding a reducing agent in place of some or all of said activator in step (a).

13. Method as claimed in claim 12, characterized in that said reducing agent is sodium dithionite.

14. Method as claimed in claim 4, characterized in that after said froth flotation, said slurry is flocculated and bleached with a reductive bleach.

15. Method as claimed in claim 14, characterized in that said slurry is flocculated with sulfuric acid and said reductive bleach is sodium dithionite.

16. Method as claimed in claim 14, characterized in that before flocculation and reductive bleaching, said slurry is allowed to settle and is dewatered by decanting.

17. Method as claimed in claim 4, characterized in that said conditioning step is carried out at a pH below 7.

18. Method as claimed in claim 17, characterized in that the first stage of said flotation step is carried out at an acid pH and an alkaline pH is used in succeeding stages of said flotation step.